# EUROPÄISCHE PATENTSCHRIFT

(11) **EP 1 538 346 B1**
(45) Veröffentlichungstag und Bekanntmachung des Hinweises auf die Patenterteilung: **26.07.2006**
(21) Anmeldenummer: 04026374.1
(22) Anmeldetag: 05.11.2004
(51) Int. Cl.: F16B 5/02, F16B 19/02, F16B 35/04

(54) **Lösbare Verbindung**
Releasable connection
Raccordement démontable

(30) Priorität: 04.12.2003 DE 10357455
(43) Veröffentlichungstag der Anmeldung: 08.06.2005
(73) Patentinhaber: Bayerische Motoren Werke Aktiengesellschaft, 80809 München (DE)
(72) Erfinder: Firmenich, Rainer, 82140 Olching (DE)

(56) Entgegenhaltungen:
- DE-B- 1 292 450
- DE-C1- 10 040 476
- FR-A- 2 151 543
- US-A- 4 917 555

## Beschreibung

Die Erfindung betrifft eine lösbare Verbindung mit den Merkmalen aus dem Oberbegriff des Patentanspruchs 1.

Sie geht von dem deutschen Patent DE 100 40 476 C1 aus. In diesem ist ein Kurbelgehäuse für eine Brennkraftmaschine, insbesondere für einen Boxer-Motor mit zwei Kurbelgehäusehälften, in denen Lagerabschnitte mit Lagerbohrungen für die Kurbelzapfen einer Kurbelwelle angeordnet sind, beschrieben. Die beiden Kurbelgehäusehälften sind im Bereich der Kurbelwellenlagerbohrungen miteinander verschraubt. Somit bildet die eine Kurbelgehäusehälfte den Lagerstuhl und die andere Kurbelgehäusehälfte den Lagerdeckel der Kurbelwellenlagerung. Die lösbare Verbindung zwischen Lagerdeckel und Lagerstuhl wird durch eine Schraubverbindung erzielt. Um die beim Betrieb der Brennkraftmaschine entstehenden Querkräfte im Kurbelwellenlager aufnehmen zu können, ist in einem Ausführungsbeispiel eine Spannhülse koaxial zur Schraubverbindung vorgesehen, die sowohl in den Lagerstuhl als auch in den Lagerdeckel ragt, um die auftretenden Querkräfte beim Betrieb aufzunehmen und somit eine Verschiebung von Lagerstuhl zu Lagerdeckel in der Trennebene des Kurbelwellenlagers zu verhindern.

Nachteilig bei der beschriebenen Ausgestaltung der lösbaren Verbindung ist ein doppelter Montageschritt, da beim Zusammenbau des Kurbelwellenlagers in einem ersten Arbeitsschritt zuerst die Spannhülse als Lagepositionierelement in den Lagerstuhl und den Lagerdeckel eingebracht werden muss und anschließend in einem zweiten Arbeitsschritt der Lagerstuhl und der Lagerdeckel mit einer Schraube gegeneinander verspannt werden müssen.

Aufgabe der vorliegenden Erfindung ist es, eine gattungsgemäße lösbare Verbindung aufzuzeigen, die einfacher montierbar ist.

Diese Aufgabe wird durch das Merkmal im kennzeichnenden Teil des Patentanspruchs 1 gelöst.
Durch die erfindungsgemäße Ausgestaltung wird ein kompletter Arbeitsschritt, die separate Montage des Lagepositionierelementes, eingespart, wodurch die Montage der lösbaren Verbindung wesentlich vereinfacht, das heißt auf die halbe Anzahl von Montageschritten reduziert ist. Dies führt zu einer erheblichen Kostenreduzierung von den Montagekosten.

Bevorzugt ist das Lagepositionierelement in der Trennebene zwischen Lagerstuhl und Lagerdeckel positionierbar, sodass auftretende Querkräfte aufgenommen werden können und ein Verschieben des Lagerdeckels gegenüber dem Lagerstuhl verhindert ist.

Aufgrund der radialen Beweglichkeit des Lagepositionierelementes werden Fertigungstoleranzen zwischen dem Gewindebereich und dem restlichen Verbindungselement ausgeglichen, solange die radiale Beweglichkeit des Lagepositionierelementes größer als die Fertigungstoleranz ist. Ein Verklemmen des Verbindungselementes in der Montagebohrung wird somit vermieden.

Durch die Anordnung eines erhabenen Bereiches beidseitig des Lagepositionierelementes ist das Lagepositionierelement nach beiden axialen Richtungen lagefixiert. In vorteilhafter Weise wird durch diese Ausgestaltung nicht nur die Fertigstellung der lösbaren Verbindung wesentlich erleichtert, sondern auch die Demontage. Bei dieser wird automatisch mit dem Entfernen des Verbindungselementes auch das Lagepositionierelement aus der Montagebohrung entfernt. Die separate Entfernung des Lagepositionierelementes entweder aus dem Lagerstuhl oder dem Lagerdeckel kann somit vollständig entfallen.

Dieser erhabene Bereich kann gemäß Patentanspruch 3 entweder einstückig mit dem Verbindungselement oder als separates Bauelement ausgeführt sein. Bei einer einstückigen Ausführung kann dieser erhabene Bereich in einfacher Weise bei der Schraubenfertigung mit hergestellt werden. Im Falle eines separaten Bauelementes, wird vorzugsweise am Außenumfang des Verbindungselementes ein Einstich vorgesehen, in den beispielsweise ohne großen Fertigungsaufwand ein geschlitzter Ring eingesetzt wird.

Durch die Ausgestaltung gemäß der Patentansprüche 4 und 5 können die zu fügenden Teile mit der lösbaren Verbindung mit einem definierten Anzugsmoment, das heißt mit einer definierten Vorspannkraft, gegeneinander verspannt werden. Dies ist besonders für lösbare Verbindungen, die Temperaturschwankungen ausgesetzt sind, vorteilhaft.

Durch die Anordnung eines Zentrierelementes gemäß Patentanspruch 6 ist eine zusätzliche Zentrierung des Verbindungselementes möglich. Ein Verbiegen des Verbindungselementes bei einer Montage, bzw. einer Demontage wird somit verhindert.

Die Ausgestaltung gemäß Patentanspruch 7 erleichtert die Montage von Verbindungselement und Lagepositionierelement und verhindert Beschädigungen an der Montagebohrung. Wenn zwei Schlupffasen vorgesehen sind, gilt dies auch für die Demontage der lösbaren Verbindung.

Im Folgenden ist die Erfindung anhand eines bevorzugten Ausführungsbeispieles in einer einzigen Zeichnung näher erläutert.

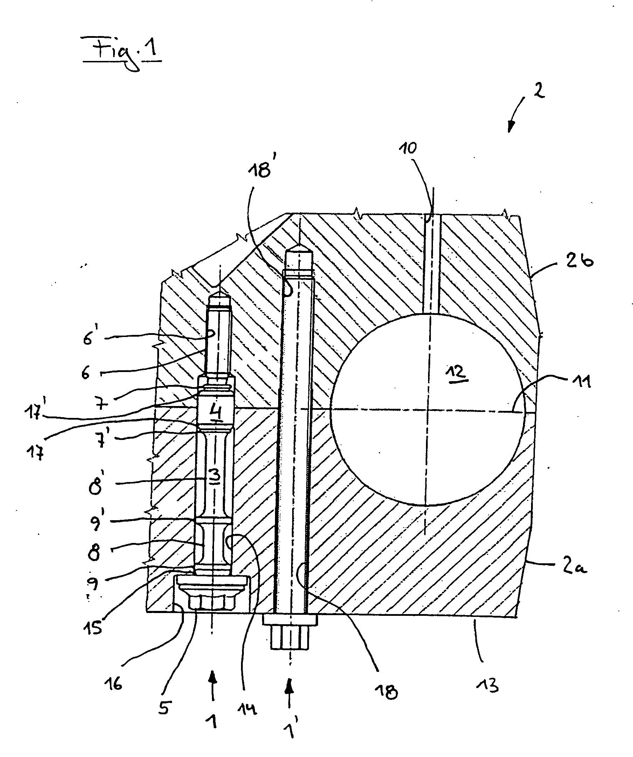

- Fig. 1: zeigt eine lösbare Verbindung 1 für ein geteiltes Lager 2, hier ein nicht vollständig dargestelltes Kurbelwellenlager für eine Brennkraftmaschine.

Das geteilte Lager 2 besteht aus einem Lagerdeckel 2a und einem Lagerstuhl 2b. Eine Trennebene 11, die den Lagerdeckel 2a und den Lagerstuhl 2b trennt, teilt auch eine Lagerbohrung 12 für eine nicht dargestellte Kurbelwellenlagerschale mittig. Senkrecht zur Trennebene 11 durchstößt eine Schmiermittelbohrung 10 den Lagerstuhl 2b bis zur Lagerbohrung 12. Der Lagerdeckel ist mit dem Lagerstuhl 2b mittels zweier lösbarer Verbindungen 1, 1' verbunden. Unter einer lösbaren Verbindung 1, 1' wird ein lösbares Verbindungselement zum befestigen zumindest eines Teiles an einem anderen Teil verstanden. Eine zur Lagerbohrung 12 benachbarte lösbare Verbindung 1' ist eine Schraube, die senkrecht zur Trennebene 11 ausgerichtet ist und deren Montagekopf auf einer Oberfläche 13 des Lagerdeckels 2a aufliegt. Die lösbare Verbindung 1' durchdringt den Lagerdeckel 2a in einer Bohrung 18 und ist in eine korrespondierende Gewindebohrung 18' in dem Lagerstuhl 2b eingeschraubt. Eine zur Lagerbohrung 12 entfernte lösbare Verbindung 1 ist eine erfindungsgemäße lösbare Verbindung 1, bestehend im wesentlichen aus einem Verbindungselement 3 und einem, radial um das Verbindungselement 3 angeordneten Lagepositionierelement 4. Das Verbindungselement 3 ist ebenfalls senkrecht zur Trennebene 11 ausgerichtet.

Das Verbindungselement 3 weist an seinem, dem Lagerstuhl 2b abgewandten Ende einen Montagekopf 5 auf, ausgehend von dem sich ein radialer Einstich 15 anfügt und weiter ein Zentrierelement 9. Weiter entfernt weist das Verbindungselement 3 einen Dehnschaft 8 auf und daran anschließend ein zweites Zentrierelement 9', sowie einen zweiten Dehnschaft 8'. Im Anschluss an den zweiten Dehnschaft 8' ist ein radial angeordneter erhabener Bereich 7 und davon beabstandet ein zweiter erhabener Bereich 7'. An den zweiten erhabenen Bereich 7' schließt ein Gewindebereich 6 an. Zwischen den erhabenen Bereichen 7, 7' ist das Verbindungselement 3 von dem Lagepositionierelement 4 koaxial umfasst. Das Lagepositionierelement 4, eine Passhülse, wird von den erhabenen Bereichen 7, 7' in axialer Richtung mit einem leichten Spiel gehalten, d. h. das Lagepositionierelement 4 stößt in axialer Richtung nicht gleichzeitig an den beiden erhabenen Bereichen 7, 7' an, um ein Verkanten bei einer Montage zu verhindern. Auch in radialer Richtung ist zwischen dem Lagepositionierelement 4 und dem Verbindungselement 3 ein Spiel das größer ist, als eine vorgegebene Fertigungstoleranz bei der Fertigung des Gewindebereiches 6.

Der Lagerdeckel weist eine Senkbohrung 16 auf, die nach einer erfolgten Montage des Verbindungselementes 3 den Montagekopf 5 aufnimmt. Konzentrisch zur Senkbohrung 16 ist eine Passbohrung 14 angeordnet, die den kompletten Lagerdeckel 2a durchdringt und sich in dem Lagerstuhl 2b um etwa die halbe axiale Länge des Lagepositionierelementes 4 fortsetzt. Anschließend an die Passbohrung 14 ist im Lagerstuhl 2b eine ebenfalls konzentrische Gewindebohrung 6' vorgesehen, die den Gewindebereich 6 des Verbindungselementes 3 aufnimmt. Wie aus Fig. 1 klar ersichtlich, befindet sich das Lagerpositionierelement 4 im eingebauten Zustand jeweils in etwa hälftig im Lagerdeckel 2a und im Lagerstuhl 2b. Während beim Betrieb der Brennkraftmaschine die lösbare Verbindung 1' hauptsächlich Kräfte senkrecht zur Trennebene 11 aufnimmt, im Fall eines Kurbelwellenlagers sind dies in erster Linie Gaskräfte, nimmt das Lagepositionierelement 4 der erfindungsgemäßen lösbaren Verbindung 1 Querkräfte auf, im wesentlichen die Massenkräfte des Kurbeltriebs. Somit sind Deformationen der Lagerbohrung 12 ausgeschlossen und ein sicherer Betrieb der Brennkraftmaschine möglich.

Sowohl bei der Montage des Lagerdeckels 2a auf den Lagerstuhl 2b, als auch bei der Demontage der beiden Bauelemente bleibt das Lagepositionierelement 4 stets in axialer Richtung koaxial um das Verbindungselement 3 durch die erhabenen Bereiche 7, 7' lagegesichert. Damit bei der Montage der lösbaren Verbindung 1 die Passbohrung 14 nicht beschädigt wird, weist das Lagepositionierelement 4 an beiden Endabschnitten auf seiner Außenfläche jeweils eine Schlupfphase 17, 17' auf. Ferner sind zwischen dem Lagepositionierelement 4 und dem Montagekopf 5 die Zentrierelemente 9, 9' vorgesehen, damit weder bei einer Montage noch einer Demontage des Verbindungselementes 3 dieses nicht verbogen werden kann und somit ein Bruch des Verbindungselementes 3 ausgeschlossen ist. Ferner verfügt das Verbindungselement 3 über zwei Dehnschäfte 8, 8', durch die ein definiertes Montageanzugsmoment für die Verspannung der zu fügenden Bauteile eingestellt werden kann.

In weiteren Ausführungsformen kann das Verbindungselement 3 andere Montageköpfe 5, z. B. einen Innensechskantmontagekopf, sowie in sämtlichen Dimensionen geänderte Abmessungen aufweisen. Im vorliegenden Ausführungsbeispiel weisen sowohl das Lagepositionierelement 4 als auch die Zentrierelemente 9, 9' denselben Außendurchmesser auf, damit nur eine einzige Passbohrung benötigt wird, in anderen Ausführungsvarianten können jedoch die Zentrierelemente 9, 9' auch einen größeren Durchmesser als das Lagepositionierelement 4 aufweisen. Die Passbohrung 14 wird für diesen Fall entsprechend mit verschiedenen Innendurchmessern dimensioniert. Auch Durchmesser und Länge des Gewindebereiches 6 können vom vorliegenden Ausführungsbeispiel deutlich abweichen. Die erhabenen Bereiche 7, 7' sind im vorliegenden Beispiel bei der Fertigung des Verbindungselementes 3 durch Rollen erzeugt, jedoch können auch Nuten eingedreht werden, in die später beispielsweise geschlitzte Ringe eingesetzt werden. Der erhabene Bereich 7' kann auch durch mechanische Bearbeitung, wie z. B. Drehen oder Schleifen, oder bereits bei der Herstellung eines Rohlings hergestellt werden. Ferner sind das vorliegende Verbindungselement 3, sowie das Lagepositionierelement 4 aus Stahl gefertigt, jedoch kann die erfindungsgemäße lösbare Verbindung 1 auch aus anderen Materialien, wie beispielsweise Kunststoffen oder Leichtmetallen, gefertigt werden. Anstelle einer Passhülse als Lagepositionierelement 4 kann auch beispielsweise eine Spannhülse verwendet werden.

Zusammengefasst können folgende Vorteile der erfindungsgemäßen Ausgestaltung aufgeführt werden:
➢ Es ist eine sichere Positionierung des geteilten Lagers 2, d. h. des Lagerdeckels 2a und des Lagerstuhls 2b zueinander möglich;
➢ Im Falle einer Kurbelwellenlagerung ist die Maßhaltigkeit der Kurbelwellenlagergasse gewährleistet;
➢ Die lösbare Verbindung 1 weist eine extrem hohe Wiederholgenauigkeit der Maßhaltigkeiten bei einer Mehrfachverschraubung auf;
➢ Das Einschlagen einzelner Passhülsen, wie im Stand der Technik entfällt;
➢ Sowohl die Montage als auch die Demontage sind einfach, da das Lagepositionierelement gleichzeitig mit dem Verbindungselement eingeschraubt bzw. herausgezogen wird;
➢ Die beim Betrieb der Brennkraftmaschine auftretenden Querkräfte in der Trennebene 11 werden zusätzlich von dem Lagepositionierelement abgefangen.

### Bezugszeichenliste

- 1, 1': Lösbare Verbindung
- 2: Geteiltes Lager
- 2a: Lagerdeckel
- 2b: Lagerstuhl
- 3: Verbindungselement
- 4: Lagepositionierelement
- 5: Montagekopf
- 6: Gewindebereich
- 6': Gewindebohrung
- 7, 7': Erhabener Bereich
- 8, 8': Dehnschaft
- 9, 9': Zentrierelement
- 10: Schmierbohrung
- 11: Trennebene
- 12: Lagerbohrung
- 13: Oberfläche
- 14: Passbohrung
- 15: Einstich
- 16: Senkbohrung
- 17, 17': Schlupfphase
- 18: Bohrung
- 18': Gewindebohrung

## Patentansprüche

1. Lösbare Verbindung (1), insbesondere für ein geteiltes Kurbelgehäuse oder ein geteiltes Lager (2), mit einem Verbindungs- (3) und einem Lagepositionierelement (4), wobei das Lagepositionierelement (4) koaxial zu dem Verbindungselement (3) angeordnet ist,
**dadurch gekennzeichnet, dass** das Lagepositionierelement (4) radial beweglich zu dem Verbindungselement (3) ist und das Verbindungselement (3) beidseitig des Lagepositionierelementes (4) einen radial erhabenen Bereich (7, 7') aufweist um eine gleichzeitige Montage zu ermöglichen.

2. Lösbare Verbindung nach Patentanspruch 1, wobei das Verbindungselement einen Montagekopf (5) und einen Gewindebereich (6) aufweist,
**dadurch gekennzeichnet, dass** das Lagepositionierelement (4) zwischen dem Montagekopf (5) und dem Gewindebereich (6) angeordnet ist.

3. Lösbare Verbindung nach Patentanspruch 1 oder 2,
**dadurch gekennzeichnet, dass** der radial erhabene Bereich (7, 7') einstückig mit dem Verbindungselement (3) oder ein separates Bauelement ist.

4. Lösbare Verbindung nach einem der Patentansprüche 1 bis 3,
**dadurch gekennzeichnet, dass** das Verbindungselement (3) einen Dehnschaft (8) aufweist.

5. Lösbare Verbindung nach Patentanspruch 4,
**dadurch gekennzeichnet, dass** der Dehnschaft (8) zwischen dem Montagekopf (5) und dem Lagepositionierelement (4) angeordnet ist.

6. Lösbare Verbindung nach Patentanspruch 4 oder 5,
**dadurch gekennzeichnet, dass** das Verbindungselement (3) zumindest zwischen dem Montagekopf (5) und dem Dehnschaft (8) ein Zentrierelement (9) aufweist.

7. Lösbare Verbindung nach einem der Patentansprüche 1 bis 6,
**dadurch gekennzeichnet, dass** das Lagepositionierelement (4) an seiner Mantelfläche zumindest eine Schlupffase (17, 17') aufweist.

## Claims

1. A releasable connection (1), especially for a divided crankshaft or a divided bearing (2), comprising a connecting element (3) and a positioning element (4), wherein the positioning element (4) is disposed coaxially with the connecting element (3),
**characterised in that** the positioning element (4) is radially movable relative to the connecting element (3), and on each side of the positioning element (4) the connecting element (3) has a radially raised region (7, 7') for the purpose of simultaneous assembly.

2. A releasable connection according to claim 1, wherein the connecting element has an assembly head (5) and a screwthreaded region (6),
**characterised in that** the positioning element (4) is disposed between the assembly head (5) and the threaded region (6).

3. A releasable connection according to claim 1 or claim 2,
**characterised in that** the radially raised region (7, 7') is integral with the connecting element (3) or is a separate component.

4. A releasable connection according to any of claims 1 to 3,
**characterised in that** the connecting element (3) has a reduced shaft (8).

5. A releasable connection according to claim 4,
**characterised in that** the reduced shaft (8) is disposed between the assembly head (5) and the positioning element (4).

6. A releasable connection according to claim 4 or claim 5,
**characterised in that** the connecting element (3) has a centring element (9), at least between the assembly head (5) and the reduced shaft (8).

7. A releasable connection according to any of claims 1 to 6,
**characterised in that** the positioning element (4) has at least one slip bevel (17, 17') on its lateral surface.

## Revendications

1. Raccordement amovible (1), en particulier pour un carter de vilebrequin divisé ou un palier divisé (2), comportant un élément de raccordement (3) et un élément de positionnement (4), l'élément de positionnement (4) étant disposé coaxialement à l'élément de raccordement (3),
**caractérisé en ce que**
l'élément de positionnement (4) est radialement mobile par rapport à l'élément de raccordement (3), et l'élément de raccordement (3) présente de part et d'autre de l'élément de positionnement (4) une zone (7, 7') radialement convexe pour permettre un montage simultané.

2. Raccordement amovible selon la revendication 1,
dans lequel l'élément de raccordement présente une tête de montage (5) et une partie filetée (6),
**caractérisé en ce que**
l'élément de positionnement (4) est disposé entre la tête de montage (5) et la partie filetée (6).

3. Raccordement amovible selon la revendication 1 ou 2,
**caractérisé en ce que**
la zone (7, 7') radialement convexe est solidaire de l'élément de raccordement (3) ou est un composant distinct.

4. Raccordement amovible selon l'une quelconque des revendications 1 à 3,
**caractérisé en ce que**
l'élément de raccordement (3) présente une tige expansible (8).

5. Raccordement amovible selon la revendication 4,
**caractérisé en ce que**
la tige expansible (8) est disposée entre la tête de montage (5) et l'élément de positionnement (4).

6. Raccordement amovible selon la revendication 4 ou 5,
**caractérisé en ce que**
l'élément de raccordement présente un élément de centrage (9), au moins entre la tête de montage (5) et la tige expansible (8).

7. Raccordement amovible selon l'une quelconque des revendications 1 à 6,
**caractérisé en ce que**
l'élément de positionnement (4) présente au moins un chanfrein de glissement (17, 17') sur sa surface latérale.
